# EUROPEAN PATENT SPECIFICATION

(11) **EP 0 637 414 B1**
(45) Date of publication and mention of the grant of the patent: **05.07.2000**
(21) Application number: 93908980.1
(22) Date of filing: 23.04.1993
(51) Int. Cl.: H04L 7/04, H04J 3/06

(54) **SYNCHRONIZATION OF SDH SIGNALS**
SYNCHRONISIERUNG VON SDH SIGNALEN
SYNCHRONISATION DES SIGNAUX A HIERARCHIE SYNCHRONE NUMERIQUE

(30) Priority: 23.04.1992 FI 921824
(43) Date of publication of application: 08.02.1995
(73) Proprietor: Nokia Networks Oy, 02150 Espoo (FI)
(72) Inventor: KLINE, Eric, FIN-02120 Espoo (FI); ALATALO, Hannu, FIN-90120 Oulu (FI); SUVITAIVAL, Pekka, FIN-01590 Maisala (FI); NIEMINEN, Juhani, FIN-02620 Espoo (FI)
(74) Representative: Hamilton, Alistair
(86) International application number: FI9300173
(87) International publication number: WO9322856

(56) References cited:
- EP-A- 0 460 835
- EP-A- 0 525 770
- DE-A- 4 012 762

## Description

The invention relates to a synchronization method according to the preamble of claim 1 in a node of the synchronous digital hierarchy.

The synchronous digital hierarchy (SDH) comprises quite a large entity to be very far advanced in order to transmit time division signals in the telecommunication network, the backbone network of which is developing from separate PCM encoded links towards a remotely controlled cross connect network. The recommendation CCITT G.707 defines the signals of the first level synchronous transport module (STM-1) for SDH signals having a transmission rate of 155.520 Mbit/s. The SDH signals or transport modules are formed by interleaving the bytes of the subsystem signals. The frames are combined into multiframes.

In the synchronous digital hierarchy each frame contains at its beginning a synchronization signal for the synchronization of an the signal, such as an STM-1 signal. The frames are combined into multiframe signals, and for instance an AU-4 multiframe signal contains four frames or STM-1 signals. In the cross connect interface the signals coming from the line are synchronized with the cross connect clock. The incoming signals thus have the same frequency and are in synchronism, but at the cross connect input they still have different phases, whereby phase differences may occur relating both to a byte and to a frame. In order to realize the cross-connection the signals must be further processed in some way.

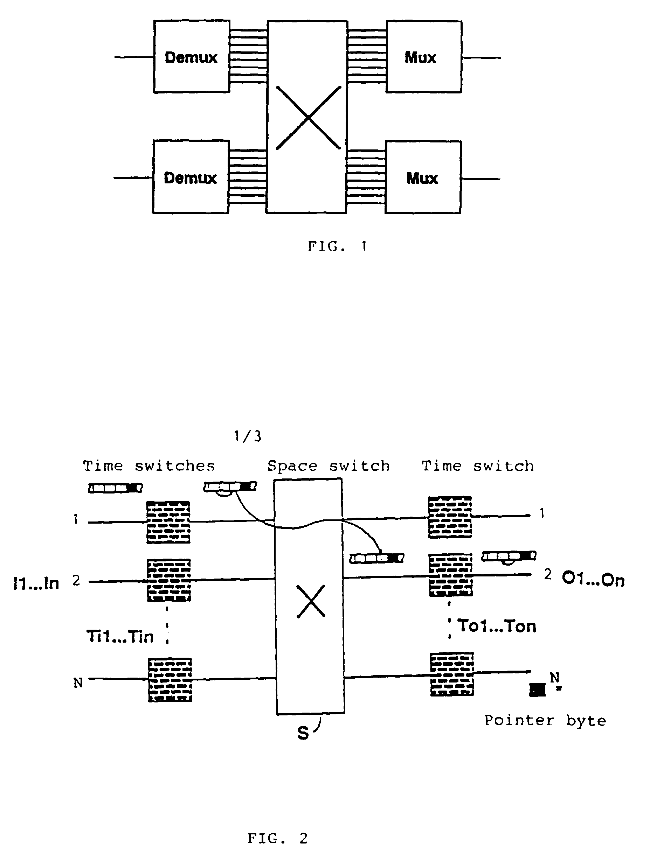

A simple and known idea is to decompose in a demultiplexer the signals on the incoming lines into signal elements, as is shown in figure 1. The signal elements are connected through the cross connect, which in this case could simply be a large space switch, and then the cross-connected signals are combined by a multiplexer to be sent on the outgoing lines.

A solution according to prior art is also to delay the incoming signals with buffers, so that the signals offered to the cross connect have the same phase. Such a solution entails an inconvenient construction and requires much components needing too much space. Due to the speeds and the large frame structures of the SDH systems the buffering would require a large amount of memories, which in practice does not appear as a sensible solution. However, this is the case for example in central offices, where 2 Mbit/s lines are connected to the cross connect. A speed like this is low compared to e.g. the SDH speeds, at which the distances between subracks and racks cause considerable delays of the transmitted signals. Due to the buffering the frame beginning of each incoming line is temporally at the same point when they are input to the time switch on the input side, which ensures the correct operation of the space switch.

An operation like that of the central offices is unacceptable in SDH cross connects. The connection times on the transmission routes are long, and the connections will not change rapidly. A basic condition when the transmission routes are connected is further that the capacity of transmission routes and also the cross connect is utilized efficiently. Due to the high operating speed it is also necessary to observe in the SDH cross connect the changing distances, which affect the coincidence of the bytes, i.e. the phase of a signal can change when it is connected to a space switch located in another rack.

When SDH signals are handled it is also conceivable that we examine in each stage of the cross connect the pointer information in the frame of the signal input to the stage, i.e. in a TST switch both in the input and output time switches and in the space switch between them. This is however a task requiring much equipment, and further both the control logic and the algorithms must be extremely fast, when we take into account the high speeds of the SDH signals and the comprehensive routing examination for large numbers of time slots.

EP-A-0460835 discloses SDH synchronization by calculating pointer information on the frame level. This is disclosed also by EP-A-0525772.

An object of the invention is now to devise such a way to synchronize the cross-connection matrix with which it is possible to avoid the disadvantages of prior art, i.e. the large number of components and the space requirements.

The present invention proposes a method according to claim 1. An essential prerequisite is that the whole cross connect or all cross connect modules always are synchronized to a defined reference clock, e.g. to the multiframe clock received on a line. Claim 1 is set in two-part form with respect to EP-A-0460835. In addition to the multiframe synchronization, the present invention permits an errorless change of the connection matrix.

Let us further state here that it is known from e.g. the publication DE-A1-4012762 to apply the so called ATM (Asynchronous Transport Module) within an SDH frame. This too means a synchronization at the frame level, not at the multiframe level as in the present invention.

In the present invention all logical connections or the pointer operations are made in accordance with this time reference. The input signals are not as such delayed to have the same phase, nor is any buffering implemented. Instead we utilize the information included in a frame concerning the addresses of the TU-12 signals to be connected, which addresses are shown by the AU-4 pointers. The realization of the invention is that the interface modules calculate such pointer information that the time switch on the input side of the cross connect can switch the signals to the space switch in a correct phase, i.e. so that the phase difference between each input signal and the reference is taken into account when the bytes are arranged into time slots in the input time switches. The signals connected to the space switch have then a correct byte order, or the signals have a correct phase regarding both the bytes and the frames. Now it is not necessary to separately synchronize the signals in the space switch. In the time switches on the output side the bytes coming from the space switch are arranged into the correct time slots for the transmission, but according to the invention not even this switching stage requires separate synchronization/phasing.

The cross connect architecture according to the invention is presented in claim 8.

Other preferred embodiments of the invention are presented in the dependent claims. Below the invention is described by examples with reference to the enclosed figures.
- Figure 1: shows schematically the embodiment of a known cross connect.
- Figure 2: shows the principle of the time-space-time cross-connection.
- Figure 3: is an illustration of the implementation of the cross connect according to the invention.
- Figure 4: is a more detailed block diagram of the cross connect according to the invention.
- Figure 5: shows the contents of the section overhead block of the STM-N frame structure.
- Figure 6: shows the contents of the connection matrix change-over byte, whereby figure 6a contains a change-over instruction and figure 6b is a situation without the change-over instruction.
- Figure 7: shows the synchronization signals on the synchronization bus, whereby figure 7a is a normal multiframe synchronization signal, to which a matrix change-over instruction according to the invention is added in figure 7b.
- Figure 8: shows schematically an expanded space switch with the capacity of 128 x 128 STM-1 signals.

The design and function of the time-space-time cross connect used also in the invention is explained with the aid of figure 2. On the left there are the input signals I1...In (here STM-1 signals) and on the right there are the output signals O1...On. There is a time switch for each line. The time switches Ti1...Tin and To1...Ton on the input side and output side, respectively, change the byte positions (within a frame) within a signal. The central space switch S transmits a signal from one time switch to a signal directed to another time switch. A time slot or a byte forms a 64 kbit/s channel. In principle the time switches are memory elements and the space switch is composed of switch elements. Generally the cross connect is implemented as a module structure with two-way operation.

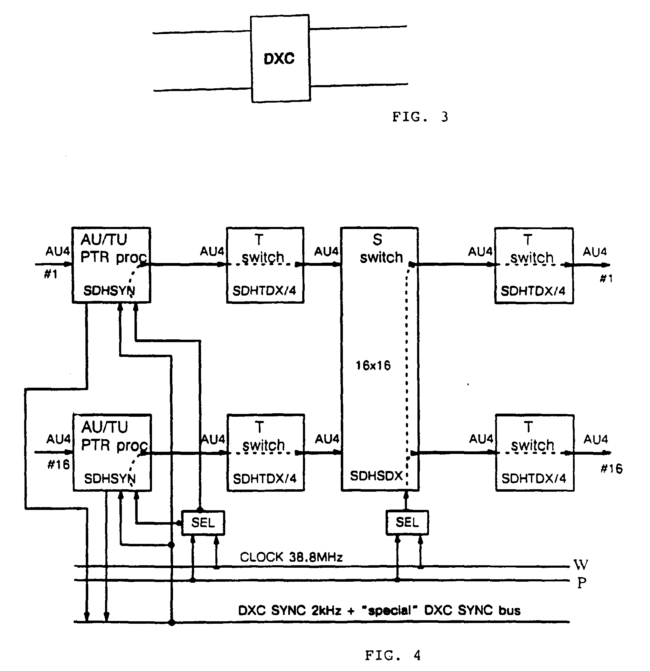

The cross connect according to the invention is symbolically shown in figure 3.

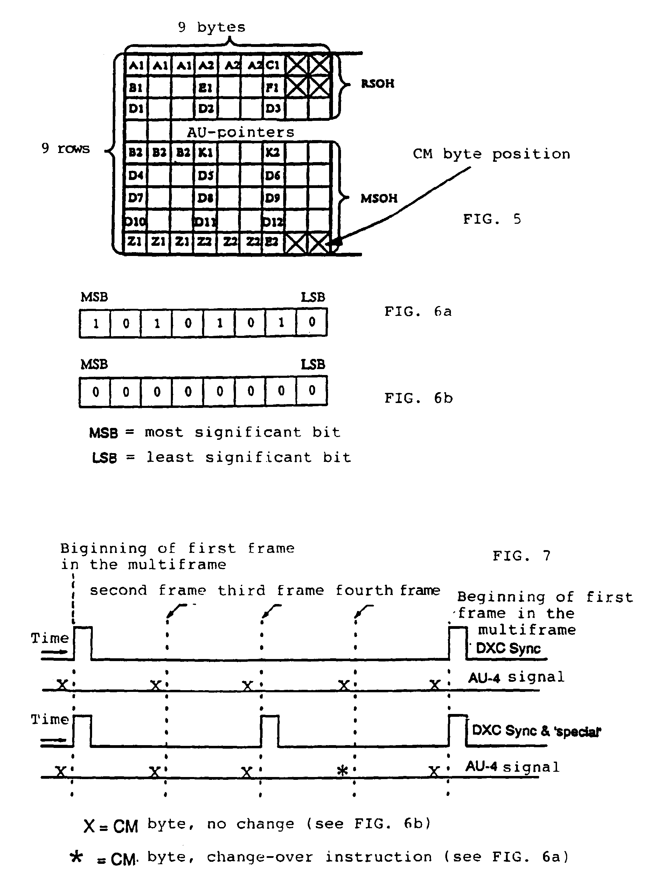

Figure 4 shows a cross connect architecture, with which the TU-12 signal connection is realized at the VC-12 (VC, Virtual Container) level, and in which the synchronization required by the invention is taken into account. In the same way as in figure 2 we have here time switches (T switch) and a space switch (S switch). The space switch in this example is a space switch which connects in total 16 STM-1 input lines to 16 outputs. In front of the time switches on the input side there is connected an interface module or synchronization circuit AU/TU (AU/TU pointer proc.) which receives from the transmission line an STM-1 signal connected via interface modules (not shown) in AU-4 form containing 4 frames. The cross connect clock (CLOCK) W operating at the frequency 38,8 MHz is connected via the selector means SEL to the synchronization circuits AU/TU and to the space switch S. The space switch is doubled (not shown). All AU-4 signal pointers are in this cross connect locked by the AU/TU circuits by the AU-4 pointer value 522.

The frame synchronization of the cross connect is supplied by the bus DXC Sync to the AU/TU circuits, which in the same way as the time switches and the space switch are also preferable realized as ASIC circuits. The synchronization reference for the cross connect is preferably supplied by a selected circuit AU/TU (AU/TU 'master'), and further distributed to all other AU/TU circuits via the DXC Sync bus interconnecting them, whereby all logical connections are made on the basis of this time reference (figure 7a) by manipulating the signal pointers in the AU/TU circuits.

The DXC Sync pulses represent 2 kHz multiframe synchronization pulses. The AU-4 signal in figure 7a represents a synchronization, to which the cross connect is locked (value 522 of the AU-4 pointer). Alternatively some other suitable clock or reference source (not shown) could be used for the synchronization.

In principle the multiframe synchronization pulses will be needed when all AU-4 signal of the cross connect must be synchronized regarding the multiframe, this situation occurring e.g. when the power is switched on, or if the DXC Sync synchronization is lost. Then the switches T and S have to be resynchronized. The processor controlling the cross-connection triggers the synchronization, whereby the interface modules AU/TU (SDHSYN) realize the start and updating of the output counters on the bases of the DXC Sync pulses. After the start all interface modules AU/TU monitor the DXC Sync signals in order to protect the bus and to detect any connection matrix change-over instructions, which is briefly described below with reference to figures 6 and 7.

The required longest delay which has to be taken into account in the multiframe synchronization is 9719 bytes (4 x 2430 bytes/STM-1). A comparison with the multiframe synchronization mark provides a delay value required by the control byte, the value being calculated in the interface modules AU/TU Pointer Proc.

With this operation according to the invention all interface modules or synchronization circuits AU/TU are synchronized regarding the multiframe. The output signals of the AU/TU circuits have the same clock frequency, which is supplied to the first time switch T. The relative delay of the time switches may be ignored, and the AU-4 signal multiframe synchronization obtained by the AU/TU circuits is maintained still when supplied to the space switch.

In principle the AU/TU circuits also realize the byte synchronization. In practice however, e.g. in the cross connect according to figure 4, the signals at the inputs of the space switch S have mutual delay differences of about ±4 bytes or clock periods, which can be due to the different distances between the respective time switches and the space switch. In order to compensate for these delay differences the inputs of the space switch are provided with short buffers having a filling length arranged to be such that the respective signal is synchronized to the selected 'master' multiframe clock. Then the bytes and frames have a correct phase before the actual space switching. A synchronization of this kind is an absolute requirement for the errorless operation of the cross connect.

The above mentioned compensating within ±4 clock periods can be tuned when the cross connect is taken into operation or when physical changes are made to its cabling, because the different delay differences are due to different distances. Delay information obtained during the tuning can be stored into a memory of the control logic and used to change the input buffer length, e.g. in connection with a change-over of the connection matrix.

Alternatively it could be arranged so that the respective delay difference at the space switch input is measured with the aid of a suitable reference signal, after which the buffer length is automatically set by the control logic.

The cross connect in figure 2 is able to realize in synchronism an errorless change-over of the connection matrix (CM) in the time switches on the input and output sides and in the space switch, so that when the connection configuration changes, the time and space switches can be completely reconfigurated to reflect the required new connection configuration. With the cross connect architecture according to the invention this can be made without having doubled time switches. In the configuration we preferably utilize the division of the signal frame into time periods, corresponding e.g.to TU-12 containers, and the connection routes are selected for each time slot. The connection matrix change-over signal "special" is also transmitted on the DXC Sync bus, as is shown in figure 7b. When a new connection configuration has to be initialized, the pulse "special" is generated on the DXC Sync bus at the beginning of the third frame in the multiframe, the pulse "special" triggering the transmission of the change-over actuation instruction CM (in figures 5 and 6a, 6b) from each AU/TU circuit. From the AU/TU circuits the instruction CM is sent in the signal stream to the time and space switches, whereby the receiving switch realizes an errorless change-over of the connection matrix during the section overhead block.

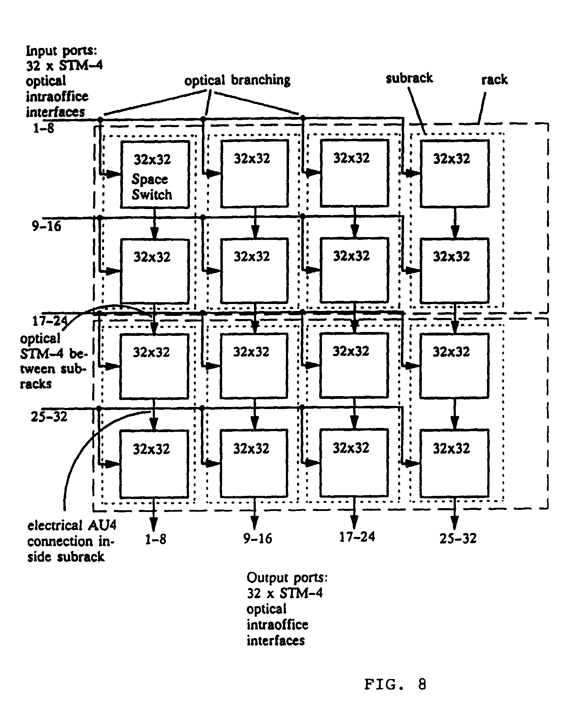

Figure 8 shows an example of a large space switch (128 x 128 STM-1; or 32 x 32 STM-4), in which 32 x 32 switches in pairs are arranged in subracks. Then a rack contains four subracks. The input lines and the output lines are optical (optical intraoffice interface); the input lines are branched. Between the subracks there are optical STM-4 interfaces, and between the space switches electrical AU-4 interfaces. The above mentioned ±4 clock periods buffer of the space switch suffices normally quite well e.g. in a 16 x 16 STM-1 cross connect, but due to the long distances the case of figure 8 calls for further actions regarding the synchronization. In principle it would be possible to delay the AU-4 signal frames with buffers. However, according to the invention we use delay calculation in the AU/TU circuits.

In the case of figure 8 the control logic monitors the buffer filling level at the input of each space switch. If the filling level exceeds a predetermined limit the control logic reports this to the synchronizing AU/TU circuit, which then makes the corresponding change in the synchronization according to a predetermined algorithm. A programmable frame synchronization of this kind mainly compensates for fixed delays, which can be determined by the configuration of the cross connect. The input buffers of the space switch, on the other hand, will handle any other, 'non-fixed' or 'changing' delays.

Although we have here studied a cross connect, a person skilled in the art understands that the method according to the invention also can be applied to other SDH nodes, containing a cross-connection function. The cross-connection can have many levels (e.g. S-T-S) and an arbitrary size. The same method according to the invention can also be applied at different SDH levels.

## Claims

1. A method to synchronize the SDH signls in an SDH node containing a cross connect, wherein the incoming signal streams (AU4 #1...#16) containing a logical multiframe structure (AU-4) are connected to the cross connect through interface modules (AU/TU), and the interface modules (AU/TU) for the incoming signals (AU-4) calculate pointer information on the basis of which time switches (T) on the input side of the cross connect connect signals supplied to the space switch (S) synchronized to the same phase,
characterized in that the interface modules (AU/TU) of the cross connect are logically synchronized by a multiframe reference clock (DXC Sync), on the basis of which the signals supplied to the space switch (S) are synchronized, and that for an errorless change-over of the connection matrix,
- as a preparation for the connection matrix change-over the reference (DXC clock Sync) sends to the switching means (T, S) a preparatory synchronization pulse (DXC Sync 'special') when calculation of the new connection matrix is finished; and
- triggered by this synchronization pulse ('special') the interface modules (AU/TU) add a connection matrix change-over instruction (CM) at a predetermined position in the signal stream (AU-4) output from the interface module (AU/TU), whereby
- the change-over instruction (CM) propagates in the signal (AU-4) through the time switches (T) and the space switches (S), in which the change-over instruction (CM) causes a respective change-over of the connection matrix synchronized to the signal (AU-4) frame structure.

2. A method according to claim 1, characterized in that the control logic transmits said synchronization pulse (DXC SYNC) at the beginning of the first frame in the multiframe structure.

3. A method according to claim 1 or 2, characterized in that the interface modules (AU/TU) are synchronized via said synchronization bus (DXC Sync) with the aid of a reference clock provided by a reference source (AU/TU 'master').

4. A method according to any previous claim, characterized in that each input of the space switch is provided with a buffer, the length of which is controlled to compensate for the effects of the delay differences on the connections between the time switches and the space switch.

5. A method according to claim 4, characterized in that the length of the buffer at each input of the space switch is ±4 clock periods.

6. A method according to claim 4 or 5, characterized in that the filling level of the space switch buffers is monitored, and that, if the filling level of an input buffer exceeds a predetermined limit, the control logic controls with an instruction representing this case the synchronization calculation of the corresponding interface module into such a direction, that the buffer filling level decreases below said limit.

7. A method according to claim 1, characterized in that the control logic transmits said synchronization pulse ('special') at the beginning of the third frame in a multiframe comprising four frames.

8. A cross connect architecture for the synchronization of SDH signals in an SDH node, the cross connect architecture comprising in succession arranged time switches, space switches and time switches, wherein the incoming signal streams (AU4 #1...#16), comprising a logical frame structure (AU-4) are arranged to be connected to the cross connect through interface modules (AU/TU), and the interface modules (AU/TU) calculate for the incoming signals (AU-4) pointer information on the basis of which the time switches (T) on the input side of the cross connect connect signals supplied to the space switch (S) synchronized to the same phase, characterized in that the cross connect interface modules (AU/TU) are arranged to be logically synchronized by a multiframe reference clock (DXC Sync), on the basis of which the logical connections are made, and that for an errorless change-over of the connection matrix :
- as a preparation for the connection matrix change-over the reference clock (DXC Sync) is arranged to send to the switching means (T,S) a preparatory synchronization pulse (DXC Sync 'special') when calculation of the new connection matrix is finished, and that
- triggered by this synchronization pulse ('special') the interface modules (AU/TU) add a connection matrix change-over instruction (CM) at a predetermined position in the signal stream (AU-4) output from the interface module (AU/TU), whereby
- the change-over instruction (CM) propagates in the signal (AU-4) through the time switches (T) and the space switches (S), in which the change-over instruction (CM) causes a respective change-over of the connection matrix synchronized to the signal (AU-4) frame structure.

9. A cross connect architecture according to claim 8, characterized in that the cross connect comprises a control logic controlling the time and space switches via an interconnecting bus, whereby the control logic selects the reference source (AU/TU 'master') at the beginning of the synchronization operation.

## Patentansprüche

1. Verfahren zur Synchronisierung der SDH-Signale in einem SDH-Knoten mit einer Querverbindung, wobei die ankommenden Signalströme (AU4 #1..#16), die eine logische Multirahmenstruktur (AU-4) aufweisen, mit der Querverbindung über Schnittstellenmodule (AU/TU) verbunden sind, und die Schnittstellenmodule (AU/TU) für die ankommenden Signale (AU-4) Zeigerinformationen berechnen, auf deren Grundlage Zeitkoppler (T) auf der Eingangsseite der Querverbindung Signale verbinden, die dem Raumkoppler (S) zugeführt werden und bezüglich der gleichen Phase synchronisiert sind, **dadurch gekennzeichnet, dass** die Schnittstellenmodule (AU/TU) der Querverbindung mittels eines Multirahmen-Referenztakts (DXC Sync) logisch synchronisiert werden, auf dessen Grundlage die dem Raumkoppler (S) zugeführten Signale synchronisiert werden, und dass für eine fehlerfreie Umschaltung der Verbindungsmatrix
die Referenz (DXC-Takt Sync) der Kopplungseinrichtung (T, S) einen Vorbereitungssynchronisierimpuls (DXC Sync "spezial") als Vorbereitung für die Verbindungsmatrixumschaltung sendet, wenn die Berechnung der neuen Verbindungsmatrix beendet ist, und
die Schnittstellenmodule (AU/TU) durch diesen Synchronisierimpuls ("spezial") getriggert einen Verbindungsmatrixumschaltbefehl (CM) an einer vorbestimmten Position in dem Signalstrom (AU-4) hinzufügen, der aus dem Schnittstellenmodul (AU/TU) ausgegeben wird, wobei
der Umschaltbefehl (CM) sich in dem Signal (AU-4) durch die Zeitkoppler (T) und die Raumkoppler (S) ausbreitet, bei denen der Umschaltbefehl (CM) eine jeweilige Umschaltung der Verbindungsmatrix synchronisiert mit der Signal(AU-4)-Rahmenstruktur bewirkt.

2. Verfahren nach Anspruch 1, **dadurch gekennzeichnet, dass** die Steuerlogik den Synchronisierimpuls (DXC Sync) zu Beginn des ersten Rahmens in der Multirahmenstruktur überträgt.

3. Verfahren nach Anspruch 1 oder 2, **dadurch gekennzeichnet, dass** die Schnittstellenmodule (AU/TU) über den Synchronisierbus (DXC Sync) mit Hilfe eines von einer Referenzquelle (AU/TU "Master") bereitgestellten Referenztakts synchronisiert werden.

4. Verfahren nach einem der vorhergehenden Ansprüche, **dadurch gekennzeichnet, dass** jeder Eingang des Raumkopplers mit einem Puffer versehen ist, dessen Länge zur Kompensation der Auswirkungen der Verzögerungsdifferenzen bei den Verbindungen zwischen den Zeitkopplern und dem Raumkoppler gesteuert wird.

5. Verfahren nach Anspruch 4, **dadurch gekennzeichnet, dass** die Länge des Puffers an jedem Eingang des Raumkopplers ±4 Taktperioden beträgt.

6. Verfahren nach Anspruch 4 oder 5, **dadurch gekennzeichnet, dass** der Füllpegel des Raumkopplerpuffers überwacht wird, und dass, falls der Füllpegel eines Eingangspuffers einen vorbestimmten Grenzwert überschreitet, die Steuerlogik mit einem diesen Fall darstellenden Befehl die Synchronisierberechnung des entsprechenden Schnittstellenmoduls in eine derartige Richtung steuert, dass der Pufferfüllpegel unter den Grenzwert fällt.

7. Verfahren nach Anspruch 1, **dadurch gekennzeichnet, dass** die Steuerlogik den Synchronisierimpuls ("spezial") zu Beginn des dritten Rahmens in einem Multirahmen aus vier Rahmen überträgt.

8. Querverbindungsarchitektur zur Synchronisierung von SDH-Signalen in einem SDH-Knoten, die aufeinanderfolgend angeordnete Zeitkoppler, Raumkoppler und Zeitkoppler aufweist, wobei die ankommenden Signalströme (AU4 #1..#16), die eine logische Rahmenstruktur (AU-4) aufweisen, zur Verbindung mit der Querverbindung über Schnittstellenmodule (AU/TU) eingerichtet sind, und die Schnittstellenmodule (AU/TU) für die ankommenden Signale (AU-4) Zeigerinformationen berechnen, auf deren Grundlage die Zeitkoppler (T) auf der Eingangsseite der Querverbindung Signale verbinden, die dem Raumkoppler (S) zugeführt werden und mit der gleichen Phase synchronisiert sind, **dadurch gekennzeichnet, dass**
die Querverbindungs-Schnittstellenmodule (AU/TU) zur logischen Synchronisierung mittels eines Multirahmen-Referenztakts (DXC Sync) eingerichtet sind, auf dessen Grundlage die logischen Verbindung hergestellt werden, und dass für eine fehlerfreie Umschaltung der Verbindungsmatrix
der Referenztakt (DXC Sync) als Vorbereitung der Verbindungsmatrixumschaltung zum Senden eines Vorbereitungssynchronisierimpulses (DXC Sync "spezial") zu der Kopplungseinrichtung (T, S) eingerichtet ist, wenn die Berechnung der neuen Verbindungsmatrix beendet ist, und
die Schnittstellenmodule (AU/TU) getriggert durch diesen Synchronisierimpuls ("spezial") einen Verbindungsmatrixumschaltbefehl (CM) an einer vorbestimmten Position in dem Signalstrom (AU-4) hinzufügen, der aus dem Schnittstellenmodul (AU/TU) ausgegeben wird, wobei
der Umschaltbefehl (CM) sich in dem Signal (AU-4) durch die Zeitkoppler (T) und die Raumkoppler (S) ausbreitet, bei denen der Umschaltbefehl (CM) eine jeweilige Umschaltung der Verbindungsmatrix synchronisiert mit der Signal(AU-4)-Rahmenstruktur bewirkt.

9. Querverbindungsarchitektur nach Anspruch 8, **dadurch gekennzeichnet, dass** die Querverbindung eine Steuerlogik umfasst, die die Zeit- und Raumkoppler über einen Kreuzverbindungsbus steuert, wobei die Steuerlogik die Referenzquelle (AU/TU "Master") zu Beginn des Synchronisiervorgangs auswählt.

## Revendications

1. Procédé pour synchroniser les signaux à SDH dans un noeud de SDH comportant une interconnexion, dans lequel les trains de signaux d'arrivée (AU4 #1 ... #16) contenant une structure logique multitrame (AU-4) sont connectés à l'interconnexion par l'intermédiaire de modules d'interface (AU/TU), et les modules d'interface (AU/TU) pour les signaux d'arrivée (AU-4) calculent des informations de pointage sur la base desquelles des commutateurs temporels (T) du côté entrée de l'interconnexion connectent des signaux fournis au commutateur spatial (S) synchronisé à la même phase,
caractérisé en ce que les modules d'interface (AU/TU) de l'interconnexion sont synchronisés d'une manière logique par un signal d'horloge de référence multitrame (DXC Sync), sur la base de quoi les signaux fournis au commutateur spatial (S) sont synchronisés, et en ce que, pour une permutation sans erreur de la matrice de connexion,
- à titre de préparation à la permutation de la matrice de connexion, l'horloge de référence (DXC dock Sync) envoie aux moyens de commutation (T, S) une impulsion de synchronisation préparatoire (DXC Sync "special") au terme du calcul de la nouvelle matrice de connexion ; et
- déclenchés par cette impulsion de synchronisation ("special"), les modules d'interface (AU/TU) ajoutent une instruction (CM) de permutation de matrice de connexion à un emplacement prédéterminé dans le train de signaux (AU-4) de sortie du module d'interface (AU/TU), grâce à quoi
- l'instruction de permutation (CM) se propage dans le signal (AU-4) via les commutateurs temporels (T) et les commutateurs spatiaux (S), où l'instruction de permutation (CM) provoque une permutation respective de la matrice de connexion synchronisée avec la structure de trame du signal (AU-4).

2. Procédé selon la revendication 1, caractérisé en ce que la logique de commande émet ladite impulsion de synchronisation (DXC SYNC) au début de la première trame de la structure multitrame.

3. Procédé selon la revendication 1 ou 2, caractérisé en ce que les modules d'interface (AU/TU) sont synchronisés par l'intermédiaire dudit bus de synchronisation (DXC Sync) à l'aide d'un signal d'horloge de référence fourni par une source de référence (AU/TU "master").

4. Procédé selon l'une quelconque des revendications précédentes, caractérisé en ce que chaque entrée du commutateur spatial comporte une mémoire tampon dont la longueur est établie pour compenser les effets des différences de retard lors des connexions entre les commutateurs temporels et le commutateur spatial.

5. Procédé selon la revendication 4, caractérisé en ce que la longueur de la mémoire tampon à chaque entrée du commutateur spatial est de ± 4 périodes d'horloge.

6. Procédé selon la revendication 4 ou 5, caractérisé en ce que le niveau de remplissage des mémoires tampons des commutateurs spatiaux est contrôlé et en ce que, si le niveau de remplissage d'une mémoire tampon d'entrée dépasse une limite prédéterminée, la logique de commande, à l'aide d'une instruction représentant ce cas, commande le calcul de synchronisation du module d'interface correspondant dans un sens tel que le niveau de remplissage de la mémoire tampon devient inférieur à ladite limite.

7. Procédé selon la revendication 1, caractérisé en ce que la logique de commande émet ladite impulsion de synchronisation ("special") au début de la troisième trame d'une multitrame comportant quatre trames.

8. Architecture d'interconnexion pour la synchronisation de signaux à SDH dans un noeud de SDH, l'architecture d'interconnexion comportant, disposés successivement, des commutateurs temporels, des commutateurs spatiaux et des commutateurs temporels, dans laquelle les trains de signaux d'arrivée
(AU4 #1...#16), comportant une structure logique de trame (AU-4) sont conçus pour être connectés à l'interconnexion par l'intermédiaire de modules d'interface (AU/TU), et les modules d'interface (AU/TU) calculent pour les signaux d'arrivée AU-4 des informations de pointage sur la base desquelles les commutateurs temporels (T) du côté entrée de l'interconnexion connectent des signaux fournis au commutateur spatial (S) synchronisé à la même phase, caractérisée en ce que les modules d'interface d'interconnexion (AU/TU) sont conçus pour être synchronisés de manière logique par un signal d'horloge de référence multitrame (DXC Sync) sur la base duquel les connexions logiques sont faites, et en ce que, pour une permutation sans erreur de la matrice de connexion:
- à titre de préparation de la permutation de la matrice de connexion, l'horloge de référence (DXC Sync) est conçue pour envoyer aux moyens de commutation (T, S) une impulsion de synchronisation préparatoire (DXC Sync "special") au terme du calcul de la nouvelle matrice de connexion, et en ce que
- déclenchés par cette impulsion de synchronisation ("special"), les modules d'interface (AU/TU) ajoutent une instruction (CM) de permutation de matrice de connexion à un emplacement prédéterminé dans le train de signaux (AU-4) de sortie du module d'interface (AU/TU), grâce à quoi
- l'instruction de permutation (CM) se propage dans le signal (AU-4) via les commutateurs temporels (T) et les commutateurs spatiaux (S), dans lesquels l'instruction de permutation (CM) provoque une permutation respective de la matrice de connexion synchronisée avec la structure de trame des signaux (AU-4).

9. Architecture d'interconnexion selon la revendication 8, caractérisée en ce que l'interconnexion comporte une logique de commande qui commande les commutateurs temporels et spatiaux par l'intermédiaire d'un bus d'interconnexion, grâce à quoi la logique de commande sélectionne la source de référence (AU/TU "master") au début de l'opération de synchronisation.
